# EUROPÄISCHE PATENTANMELDUNG

(11) **EP 1 604 559 A1**
(43) Veröffentlichungstag der Anmeldung: **14.12.2005**
(21) Anmeldenummer: 05012295.1
(22) Anmeldetag: 08.06.2005
(51) Int. Cl.: A01B 75/00

(54) **Sitz- bzw. Abstützgerät für einen Benutzer, der sich bei der Durchführung von ihm zustehenden Arbeiten in einer vorgegebenen Richtung fortbewegen muss**

(30) Priorität: 08.06.2004 IT BZ20040024
(71) Anmelder: SAPITEC di PHILIPP SANTER, 39052 Caldaro (BZ) (IT)
(72) Erfinder: Santer, Philip, 39052 Caldaro (BZ) (IT)
(74) Vertreter: Ghioni, Carlo Raoul Maria

(57) **Zusammenfassung**

Ein Sitz- bzw. Abstützgerät für einen Benutzer, der sich bei der Durchführung von ihm zustehenden Arbeiten in einer vorgegebenen Richtung fortbewegen muss, umfasst: ein Paar von zueinander ausgerichteten, freilaufenden Rädern (1a, 1b) und einen Rahmen, an dem die beiden Räder (1a, 1b) auf einer längs der vorgegebenen Richtung drehbaren Weise verbunden sind und auf dem der Benutzer Platz findet, um sich zu setzen oder abzustützen.

Erfindungsgemäss besteht der Rahmen aus mindestens zwei Teilen, und zwar einem ersten (2a) und einem zweiten Rahmenteil (2c), die, auf gegebenenfalls gegenseitig neigbare, jedoch wahlweise auch, sowohl in einer gegenseitigen geneigten als auch in einer gegenseitigen nicht geneigten Position der beiden Rahmenteile (2a, 2c) gegenseitig arretierbare Weise miteinander verbunden sind, wobei eines (1a) der beiden Räder mit dem ersten Rahmenteil (2a) verbunden ist, und zwar außer der längs der vorgegebenen Richtung erwähnten drehbaren Weise auch derart, dass ein Neigen des ersten Rahmenteils (2a) gegenüber dem Rad (1a) erlaubt wird.

## Beschreibung

Die Erfindung betrifft einen Sitz- bzw. Abstützgerät für einen Benutzer, der sich bei der Durchführung von ihm zustehenden Arbeiten in einer vorgegebenen Richtung fortbewegen muss.

Sowohl in der Industrie als auch in der Landwirtschaft, gibt es eine Vielzahl von Situationen, wo sich ein Benutzer längs einer vorgegebenen Richtung fortbewegen muss, während er Arbeiten durchführt, die oft zu wiederholen sind und in einer gewissen Höhe vom Boden durchgeführt werden müssen. Man denke beispielsweise an den Montagelinien in einer Fabrik oder der Pflegearbeit, die man im Falle von Gemüse, wie beispielsweise den Tomaten, und den in Reihen angeordneten nicht hohen Pflanzen, wie beispielsweise den Apfelbäumen oder Reben, während deren Wachsen leistet.

Ist die Höhe vom Boden nicht besonders groß und beträgt sie Werte die etwa bei einem Meter liegen, finden, um den Rücken des Benutzers nicht zu belasten, geeignete Geräte für das Sitzen des Benutzers Anwendung.

Gemäß dem Stand der Technik umfassen diese Geräte zwei freilaufende Räderpaare und einen Rahmen, an dem die beiden Räderpaare auf einer längs der vorgegebenen Richtung drehbaren Weise verbunden sind und auf dem der Benutzer, um sich zu setzen, Platz findet.

Der Rahmen weist einen Sitz für das Sitzen des Benutzers auf. Der Benutzer setzt sich quer zur vorgegebenen Richtung auf das Gerät nieder und berührt mit den Füssen derart den Boden, dass die ihm zustehenden Arbeiten durchgeführt werden können, während er mit den Füßen das Gerät längs der vorgegebenen Richtung fortbewegt.

Um jedes Mal die Höhe des Sitzes vom Boden der Größe des Benutzers anzupassen, weist der Sitz einen eigenen, kleinen Rahmen auf, dessen ein Teil innerhalb einem entsprechenden Teil des Geräterahmens verschiebbar ist. Die Höhenposition vom Boden wird dann arretiert, indem mit der Hand in entsprechenden gegenüberliegenden Bohrungen der beiden Teile ein Bolzen eingebracht wird. Dieses bekannte Gerät weist jedoch verschiedene Nachteile auf. Ein erster Nachteil besteht in dem massiven und sperrigen es kennzeichnenden Aufbau mit geradezu vier Rädern und einem entsprechend entwickelten Rahmen zur Verbindung der beiden Räderpaare. Dies wirkt sich vor allem im landwirtschaftlichen Bereich negativ aus, insbesondere im Fall von Rebanlagen, falls der Boden nicht eben ist, oder im Fall von Intensivkulturen, wo der zur Verfügung stehende Raum zwischen zwei Reihen sehr klein ist. Wegen der Masse des Geräts ist darüberhinaus der Benutzer anfangs gezwungen, um das Gerät in Position zu bringen, es mit einem Seil zu ziehen, weil es nicht möglich ist es zu heben. Auch der Transport des Gerätes von einer Pflanzung zur anderen oder von einer Industriehalle zur anderen wird durch dessen Sperrigkeit beeinflusst.

Ein weiterer Nachteil dieses bekannten Gerätes besteht in der Schwierigkeit, es bei Abhängen zu benutzen, da in diesem Fall der Benutzer sich auf einen Sitz setzen muss, der wie der Abhang geneigt ist.

Die Aufgabe der vorliegenden Erfindung besteht in der Entwicklung eines Sitzgerätes für einen Benutzer, derart, dass sowohl das Gewicht als auch der Platzbedarf auf ein Mindestmaß reduziert wird, sowie derart, dass es in Anwesenheit eines beliebigen Bodens, einschliesslich eines auch steilen Abhanges, einfach verwendbar ist.

Diese Aufgabe wird durch die im kennzeichnenden Teil des Anspruchs 1 angegebenen Merkmale gelöst.

Demgemäss besteht der Rahmen aus mindestens zwei Teilen, und zwar einem ersten und einem zweiten Rahmenteil, die, auf gegebenenfalls gegenseitig neigbare, jedoch wahlweise auch, sowohl in einer gegenseitigen geneigten als auch in einer gegenseitigen nicht geneigten Position der beiden Rahmenteile, gegenseitig arretierbare Weise miteinander verbunden sind, wobei eines der beiden Räder mit dem ersten Rahmenteil verbunden ist, und zwar außer der längs der vorgegebenen Richtung erwähnten drehbaren Weise auch derart, dass ein Neigen des ersten Rahmenteiles gegenüber dem Rad erlaubt wird.

Der Erfindung liegt die erneuernde Idee zugrunde, den bekannten starren Rahmen mit einem gelenkigen, aus mehreren Teilen bestehenden, dennoch versteifbaren Rahmen zu ersetzen. Auf diese Art und Weise kann der Rahmen die Gestaltung annehmen, die der örtlichen Situation des Bodens am besten passt, bevor er starr arretiert wird.

Insbesondere, beispielsweise in Anwesenheit eines Abhanges, erlaubt dies, mindestens eine Rahmenfläche horizontal zu halten, auf der der Benutzer den Sitzplatz finden kann.

Darüberhinaus, indem erfinderisch die Tatsache ausgenützt wird, dass der Benutzer, der die Füße fest am Boden abstützt, imstande ist, der Stabilität des Gerätes beizutragen, sind erfindungsgemäß nur zwei zueinander ausgerichtete Räder vorgesehen, sodass sowohl das Gewicht als auch der Platzbedarf des Gerätes auf ein Mindestmaß gehalten werden kann. Dieses Merkmal bringt weitere Vorteile mit sich.

Ein erster Vorteil besteht in der Tatsache, dass der Platzbedarf in Querrichtung des Gerätes tatsächlich ein Mindestmaß beträgt und dies ermöglicht dessen Verwendung zwischen den Reihen von Intensivpflanzungen.
Ein zweiter Vorteil besteht in der Tatsache, dass das Gerät in der quer zur vorgegebenen Richtung liegenden Richtung neigbar ist, wodurch der Benutzer sich auch nur am Gerät abstützen kann ohne sich darauf niederzusetzen. Dies kann in Fällen nützlich sein, in denen die Arbeitshöhe etwas höher liegt als zuvor angegeben.

Ein weiterer Vorteil ergibt sich in Anwesenheit von besonders steilen Abhängen, auf denen es schwierig wäre, sich der Gewichtskraft entgegenzusetzen, indem man quer zum Gerät darauf sitz, und liegt in der Tatsache, dass es möglich ist, sich auf dem Gerät rittlings und in die vorgegebene Richtung gerichtet niederzusetzen.

Der Patentanspruch 2 betrifft eine einfache und wirksame technische Lösung zur jeweiligen Ausführung der Verbindung zwischen dem ersten Rahmenteil und einem der Räder und die Verbindung zwischen den beiden Rahmenteilen. Diese Lösung erlaubt insbesondere ein sehr einfaches und rasches Auseinandernehmen des Gerätes, um es zu transportieren.

Anspruch 3 betrifft eine einfache und wirksame technische Lösung um den Rahmen starr zu arretieren, sobald er sich in der für dessen Verwendung geeigneten Gestaltung befindet.

Anspruch 4 sieht vor, den Sitz, auf dem der Benutzer Platz findet, unmittelbar am Rahmen anzuordnen, ohne Zwischenschaltung von anderen Strukturen.

Anspruch 5 betrifft eine besonders interessante, symmetrische Ausführungsform, die gegenüber der im Anspruch 1 beanspruchten asymmetrischen Ausführungsform, die Höheneinstellung des Sitzes ohne Zuhilfenahme von weiteren, fremden Bestandteilen am Rahmen erlaubt.

Um nämlich den Sitz vom Boden abzuheben, indem die Höhe jener des Benutzer angepasst wird, wird es ausreichend sein, den ersten und den zweiten Rahmenteil um denselben Winkel zu neigen, sollte der Boden eben sein. Ist der Boden nicht eben und ist ein Abhang anwesend, ist es noch möglich, den Sitz vom Boden abzuheben und ihn in horizontaler Position zu halten, weil die Neigungen der beiden Rahmenteile auf zueinander verschiedenen Größen einstellbar sind.

Ein weiterer Vorteil dieser Ausführungsform liegt in der Tatsache, dass sie die gegenseitige Annäherung der beiden Räder erlaubt, wobei der Platzbedarf des Gerätes auf ein Mindestmaß gebracht wird, wenn man den Transport des Geräts ohne dessen Auseinandernehmen wünscht.

Anspruch 6 betrifft ein Merkmal, das die Einstellarbeit der geeignetsten Gestaltung des Rahmens erleichtert.

Weitere Vorteile und Merkmale der Erfindung gehen näher aus der folgenden Beschreibung eines Ausführungsbeispieles der Erfindung hervor, der beispielsweise, jedoch nicht begrenzenderweise aufgrund der beigelegten Zeichnungen erläutert ist. Es zeigen:
- Figur 1: eine schematische Seitenansicht eines erfindungsgemäßen Gerätes,

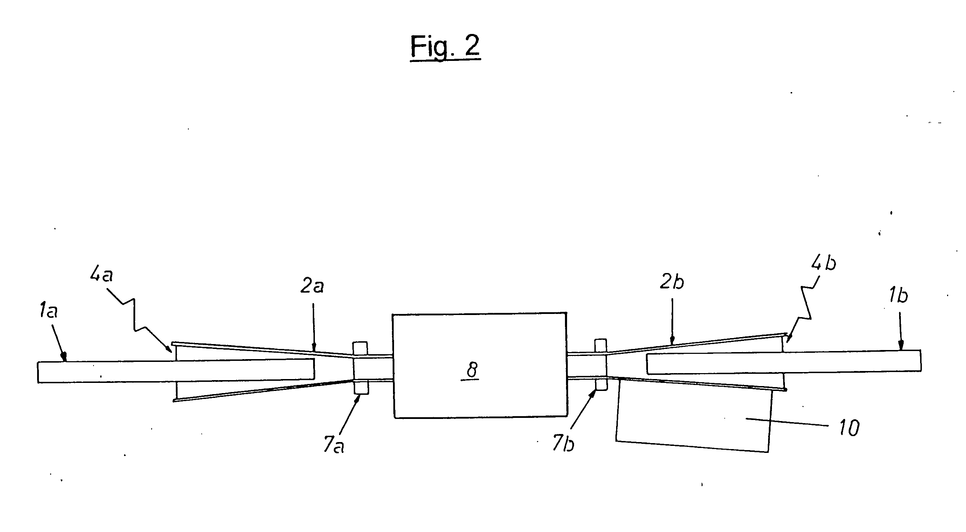

- Figur 2: eine schematische Draufsicht des Gerätes aus Figur 1,
- Figur 3: eine vergrößerte Einzelheitansicht des Verbindungsbereiches der beiden Rahmenteilen des Gerätes aus Figur 1, jedoch auch eine vergrößerte Einzelheitansicht desselben Verbindungsbereiches, jedoch des Gerätes aus Figur 4,
- Figur 3b: eine vergrößerte Einzelheitansicht des anderen Verbindungsbereiches von zwei Rahmenteilen des Gerätes aus Figur 4,
- Figur 4: eine schematische Seitenansicht des Gerätes aus Figur 1, wobei der Sitz nach oben abgehoben wird,
- Figur 5: eine schematische Seitenansicht eines erfindungsgemäßen, auf einem Abhang angeordneten Gerätes.

In den Figuren der Zeichnung ist ein Sitz- bzw. Abstützgerät für einen Benutzer dargestellt, der sich bei der Ausführung von ihm zustehenden Arbeiten längs einer vorgegebenen Richtung fortbewegen muss.

Das Gerät umfasst ein Paar von zueinander ausgerichteten freilaufenden Rädern 1a, 1b und einen Rahmen, an dem die beiden Räder 1a, 1b auf einer längs der vorgegebenen Richtung drehbaren Weise verbunden sind und auf dem der Benutzer Platz findet, um sich zu setzen oder abzustützen.

Gemäß der Erfindung besteht der Rahmen aus mindestens zwei Teilen, einem ersten 2a und einem zweiten Rahmenteil 2c, die, auf gegebenenfalls gegenseitig neigbare, jedoch wahlweise auch, sowohl in einer gegenseitigen geneigten als auch in einer gegenseitigen nicht geneigten Position der beiden Rahmenteile 2a, 2c gegenseitig arretierbare Weise miteinander verbunden sind. Diese Verbindung wird mittels eines ersten Bolzens 3a erhalten, der in entsprechenden gegenüberliegenden Bohrungen des ersten 2a und des zweiten Rahmenteils 2c eingebracht ist. Darüberihinaus ist, wiederum erfindungsgemäß, das Rad 1a mit dem ersten Rahmenteil 2a verbunden und zwar außer auf der längs der vorgegebenen Richtung erwähnten drehbaren Weise, auch derart, dass ein Neigen des ersten Rahmenteils 2a gegenüber dem Rad 1a erlaubt wird. Diese Verbindung wird beispielsweise mittels eines zweiten Bolzens 4a erhalten, der in der Nabe des Rades 1a und in zweiten entsprechenden, gegenüberliegenden Bohrungen des ersten Rahmenteils 2a eingebracht ist.

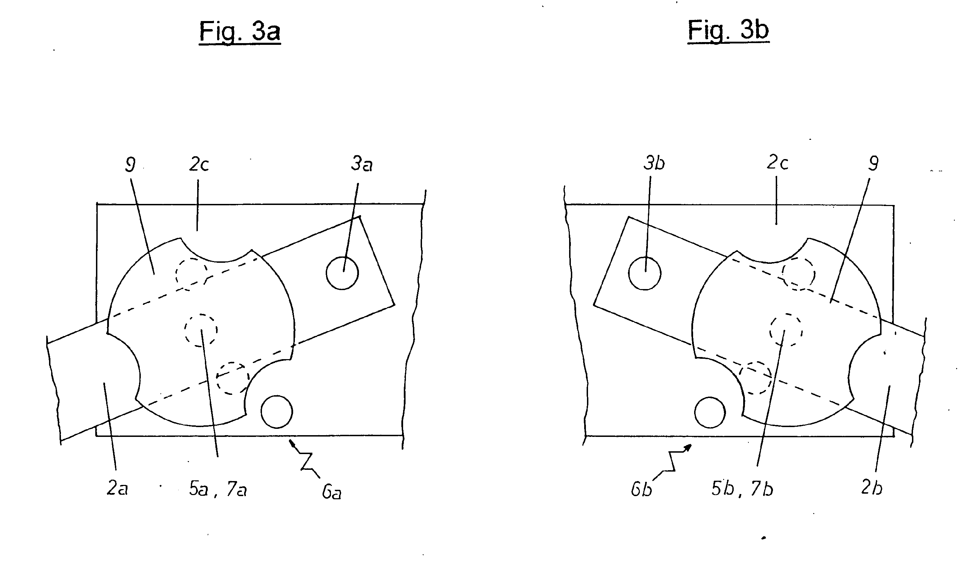

Im ersten Rahmenteil 2a gibt es eine weitere Bohrung 5a, während im zweiten Rahmenteil 2c eine Vielzahl von weiteren Bohrungen 6a vorgesehen ist, wie dies insbesondere aus Figur 3a hervorgeht. Alle diese weitere Bohrungen sind vorgesehen, um den Rahmen starr zu arretieren.

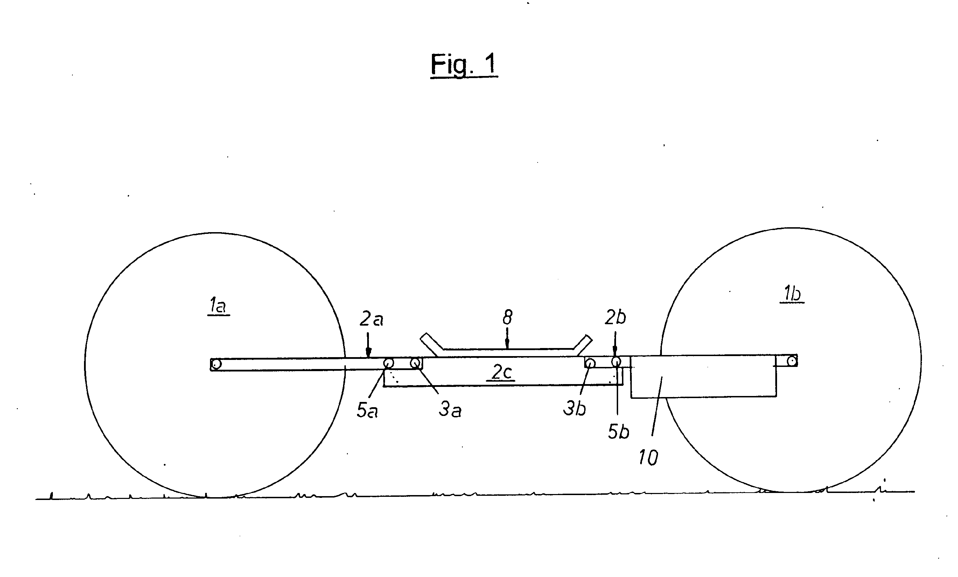

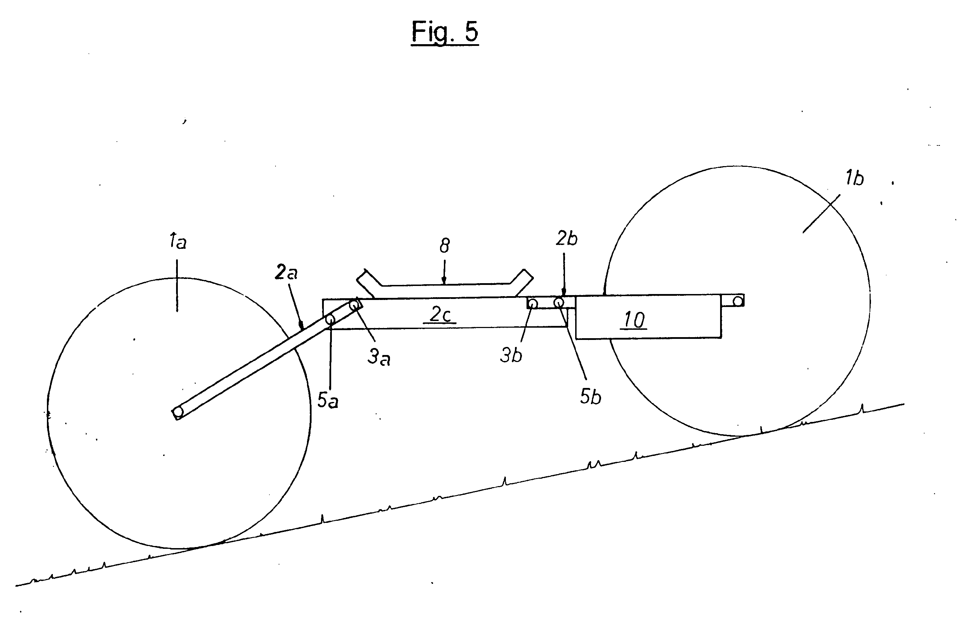

Insbesondere, ist eine dieser Bohrungen dem Fehlen einer gegenseitigen Neigung der beiden Rahmenteilen 2a und 2c zugeordnet, d.h. die in Figur 1 dargestellte Position, während die anderen Bohrungen den verschiedenen, einstellbaren Grössen der gegenseitigen Neigung der beiden Rahmenteile 2a, 2c zugeordnet sind, wie beispielsweise die in Figur 5 dargestellte Position.

Um den Rahmen in einer gegenseitigen geneigten bzw. nicht geneigten Position der beiden Rahmenteile 2a, 2c zu arretieren, wird ein dritter Bolzen 7a in die weitere Bohrung 5a des ersten Rahmenteils 2a eingebracht, sobald diese weitere Bohrung 5a mit der zugeordneten Bohrung einer der weiteren Bohrungen 6a des zweiten Rahmenteils 2c zusammenfällt.

Um das Gerät dem Abhang anzupassen, genügt es, den dritten Bolzen 7a aus der Bohrung, in der er sich befindet, herauszuziehen, das Rahmenteil 2a zu neigen, bis das Rahmenteil 2c sich in einer etwa horizontalen Position befindet und die Bohrungen 5a mit der zugeordneten Bohrung 6a zusammenfällt und dann den dritten Bolzen 7a in die Bohrung 5a und in die Bohrung 6a, mit der er zusammenfällt, einzuführen.

Um das Ausziehen oder das Einbringen des dritten Bolzens 7a zu erleichtern, weist dieser einen Griff 9 auf, der das Anfassen mit der Hand erleichtert.

Gemäß einer weiteren Ausführungsform des erfindungsgemäßen Gerätes, umfasst der Rahmen auch einen dritten Rahmenteil 2b, der mit dem zweiten Rahmenteil 2c verbunden ist und zwar auf eine gegebenenfalls gegenseitig neigbare, jedoch wahlweise auch, sowohl in einer gegenseitigen geneigten als auch in einer gegenseitigen nicht geneigten Position der beiden Rahmenteile 2b, 2c gegenseitig arretierbare Weise. Das andere 1b der beiden Räder ist mit dem dritten Rahmenteil 2b verbunden und zwar außer der längs der vorgegebenen Richtung drehbaren Weise auch derart, dass ein Neigen des dritten Rahmenteils 2b gegenüber dem Rad 1b erlaubt wird.

Auf ähnliche Weise wie oben beschrieben, wird die Verbindung zwischen dem dritten Rahmenteil 2b und dem zweiten Rahmenteil 2c mittels eines vierten Bolzens 3b erhalten, der in weiteren, entsprechenden gegenüberliegenden Bohrungen des dritten 2b und des zweiten Rahmenteils 2c eingebracht ist, während die Verbindung zwischen dem dritten Rahmenteil 2b und dem Rad 1b mittels eines fünften Bolzens 4b erhalten wird, der in der Nabe des Rades 1b und in zweiten, weiteren, entsprechenden, gegenüberliegenden Bohrungen des dritten Rahmenteils 2b eingebracht ist.

Der dritte Rahmenteil 2b weist eine zweite, weitere Bohrung 5b auf, während der zweite Rahmenteil 2c eine zweite Viehlzahl von weiteren Bohrungen 6b aufweist.

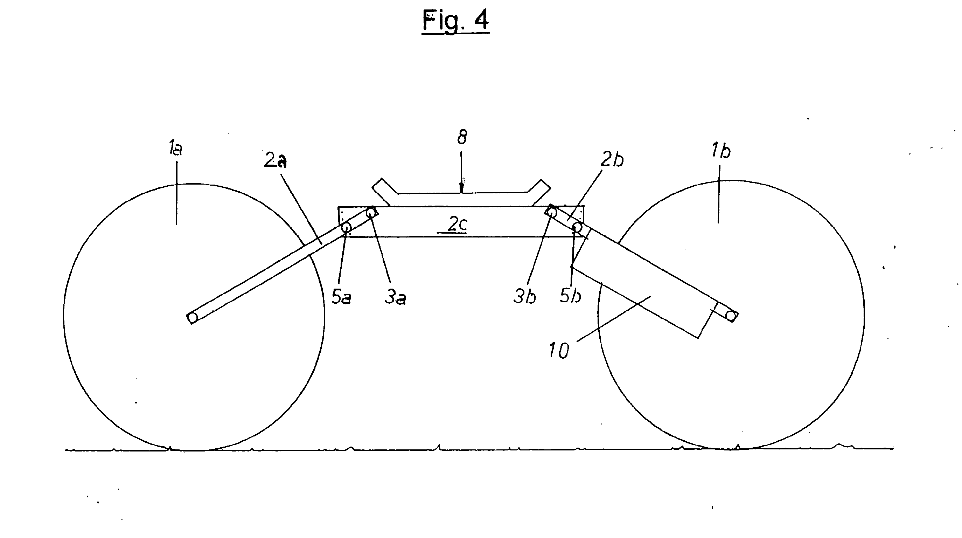

Eine dieser weiteren Bohrungen ist dem Fehlen einer gegenseitigen Neigung zwischen den beiden Rahmenteilen 2b und 2c zugeordnet, so wie z.B. in Figur 1 gezeigt ist, während die anderen, weiteren Bohrungen verschiedenen, einstellbaren Größen der gegenseitigen Neigung der beiden Rahmenteile 2b und 2c zugeordnet sind, so wie z.B. in Figur 4 gezeigt ist.

Um den Rahmen in gegenseitig geneigter bzw. gegenseitig nicht geneigter Position der beiden Rahmenteile 2d, 2c zu arretieren, wird ein sechster Bolzen 7b in die zweite weitere Bohrung 5b des dritten Rahmenteils 2b eingebracht, sobald diese Bohrung 5b mit der zugeordneten Bohrung einer der weiteren Bohrungen 6b des zweiten Rahmenteils 2c zusammenfällt.

Um die Höhe vom Boden des Rahmenteils 2c zu ändern, genügt es, sowohl den dritten 7a als auch den sechsten Bolzen 7b aus den Bohrungen herauszuziehen, in denen sie sich befinden, die beiden Rahmenteile 2a und 2b zu neigen, bis der Rahmenteil 2c sich in der etwa horizontalen, gewünschten Position befindet und die Bohrung 5a bzw. 5b mit der zugeordneten Bohrung 6a bzw. 6b zusammenfällt. Dann wird der dritte Bolzen 7a in die Bohrung 5a und in die Bohrung 6a bzw. der sechste Bolzen 7b in die Bohrung 5b und in die Bohrung 6b, mit der sie zusammenfällt, eingebracht.

Um das Ausziehen oder das Einbringen des sechsten Bolzens 7b zu erleichtern, weist dieser ähnlich wie der dritte Bolzen 7a einen Griff 9 auf, der das Anfassen mit der Hand erleichtert.

Zweckmäßiger Weise weist in beiden Ausführungsformen des erfindungsgemäßen Gerätes der zweite Rahmenteil 2c einen Sitz 8 für das Sitzen oder das Abstützen des Benutzers auf. Darüberhinaus kann am Rahmen ein Fach 10 für Arbeitswerkzeuge vorgesehen sein.

Alle Bolzen können aus Schraubenbolzen bestehen, die mit Schraubenmuttern arretiert werden.

## Patentansprüche

1. Sitz- bzw. Abstützgerät für einen Benutzer, der sich bei der Durchführung von ihm zustehenden Arbeiten in einer vorgegebenen Richtung fortbewegen muss, umfassend:
ein Paar von zueinander ausgerichteten, freilaufenden Rädern (1a, 1b) und einen Rahmen, an dem die beiden Räder (1a, 1b) auf einer längs der vorgegebenen Richtung drehbaren Weise verbunden sind und auf dem der Benutzer Platz findet, um sich zu setzen oder abzustützen, **dadurch gekennzeichnet, dass** der Rahmen aus mindestens zwei Teilen besteht, und zwar einem ersten (2a) und einem zweiten Rahmenteil (2c), die, auf gegebenenfalls gegenseitig neigbare, jedoch wahlweise auch, sowohl in einer gegenseitigen geneigten als auch in einer gegenseitigen nicht geneigten Position der beiden Rahmenteile (2a, 2c) gegenseitig arretierbare Weise miteinander verbunden sind, wobei eines (1a) der beiden Räder mit dem ersten Rahmenteil (2a) verbunden ist, und zwar außer der längs der vorgegebenen Richtung erwähnten drehbaren Weise auch derart, dass ein Neigen des ersten Rahmenteils (2a) gegenüber dem Rad (1a) erlaubt wird.

2. Gerät nach Anspruch 1, **dadurch gekennzeichnet, dass** die Verbindung zwischen dem ersten (2a) und dem zweiten Rahmenteil (2c) mittels eines ersten Bolzens (3a) erhalten wird, der in entsprechenden, gegenüberliegenden Bohrungen des ersten (2a) und des zweiten Rahmenteils (2c) eingebracht ist und dass die Verbindung zwischen dem ersten Rahmenteil (2a) und dem Rad (1a) mittels eines zweiten Bolzens (4a) erhalten ist, der in der Nabe des Rades (1a) und in zweiten, entsprechenden, gegenüberliegenden Bohrungen des ersten Rahmenteils (2a) eingebracht ist.

3. Gerät nach Anspruch 1 oder 2, **dadurch gekennzeichnet, dass** der erste Rahmenteil (2a) eine weitere Bohrung (5a) und dass der zweite Rahmenteil (2c) eine Vielzahl von weiteren Bohrungen (6a) aufweist, von denen eine dem Fehlen und die anderen den verschiedenen, einstellbaren Grössen der gegenseitigen Neigung der beiden Rahmenteile (2a, 2c) zugeordnet sind, wobei, um in einer gegenseitigen geneigten bzw. nicht geneigten Position die beiden Rahmenteile (2a, 2c) zu arretieren, ein dritter Bolzen (7a) in die weitere Bohrung (5a) des ersten Rahmenteils (2a) eingebracht wird, sobald die weitere Bohrung (5a) mit der zugeordneten Bohrung einer der weiteren Bohrungen (6a) des zweiten Rahmenteils (2c) zusammenfällt.

4. Gerät nach Anspruch 3, **dadurch gekennzeichnet, dass** der zweite Rahmenteil (2c) einen Sitz (8) für das Niedersitzen oder Abstützen des Benutzers aufweist.

5. Gerät nach einem der vorstehenden Ansprüche, **dadurch gekennzeichnet, dass** der Rahmen auch einen dritten Rahmenteil (2b) umfasst, das mit dem zweiten Rahmenteil (2c) verbunden ist und zwar auf gegebenenfalls gegenseitig neigbare, jedoch wahlweise auch, sowohl in einer gegenseitigen geneigten als auch in einer gegenseitigen nicht geneigten Position der beiden Rahmenteile (2b, 2c) gegenseitig arretierbare Weise, wobei das andere (1b) der beiden Räder mit dem dritten Rahmenteil (2b) verbunden ist und zwar außer der längs der vorgegebenen Richtung erwähnten drehbaren Weise auch derart, dass ein Neigen des dritten Rahmenteiles (2b) gegenüber dem Rad (1b) erlaubt wird,
dass die Verbindung zwischen dem dritten Rahmenteil (2b) und dem zweiten Rahmenteil (2c) mittels eines vierten Bolzens (3b) erhalten wird, der in weiteren, entsprechenden, gegenüberliegenden Bohrungen des dritten (2b) und des zweiten Rahmenteils (2c) eingebracht ist,
dass die Verbindung zwischen dem dritten Rahmenteil (2b) und dem anderen Rad (1b) mittels eines fünften Bolzens (4b) erhalten ist, der in der Nabe des Rades (1b) und in zweiten, weiteren, entsprechenden gegenüberliegenden Bohrungen des dritten Rahmenteils (2b) eingebracht ist,
dass das dritte Rahmenteil (2b) eine zweite, weitere Bohrung (5b) aufweist,
und dass der zweite Rahmenteil (2c) eine zweite Vielzahl von weiteren Bohrungen (6b) aufweist, von denen eine dem Fehlen und die anderen den verschiedenen, einstellbaren Grössen der gegenseitigen Neigung der beiden Rahmenteile (2b, 2c) zugeordnet sind, wobei, um in einer gegenseitigen geneigten bzw. nicht geneigten Position die beiden Rahmenteile (2b, 2c) zu arretieren, ein sechster Bolzen (7b) in die weitere zweite Bohrung (5b) des dritten Rahmenteils (2b) eingebracht wird, sobald die Bohrung (5b) mit der zugeordneten Bohrung einer der weiteren Bohrungen (6b) des zweiten Rahmenteils (2c) zusammenfällt.

6. Gerät nach Anspruch 4 oder 5, **dadurch gekennzeichnet, dass** der dritte Bolzen (7a) bzw. der sechste Bolzen (7b) einen Griff (9) aufweist, der das Anfassen mit der Hand, während des Ausziehens aus den und des Einbringens in die weiteren Bohrungen (5a, 6a bzw. 5b, 6b), erleichtert.
